# EUROPÄISCHE PATENTSCHRIFT

(11) **EP 0 987 412 B1**
(45) Veröffentlichungstag und Bekanntmachung des Hinweises auf die Patenterteilung: **28.04.2004**
(21) Anmeldenummer: 99114467.6
(22) Anmeldetag: 23.07.1999
(51) Int. Cl.: F02B 27/02, F02M 35/116

(54) **Sauganlage**
Intake system
Système d'admission

(30) Priorität: 18.09.1998 DE 19842724
(43) Veröffentlichungstag der Anmeldung: 22.03.2000
(73) Patentinhaber: Dr.Ing. h.c.F. Porsche Aktiengesellschaft, 70435 Stuttgart (DE)
(72) Erfinder: Rutschmann, Erwin, 75233 Tiefenbronn (DE); Brüstle, Claus, 70839 Gerlingen (DE)

(56) Entgegenhaltungen:
- EP-A- 0 200 930
- EP-A- 0 265 960
- GB-A- 2 117 043
- PATENT ABSTRACTS OF JAPAN vol. 012, no. 039 (M-665), 5. Februar 1988 (1988-02-05) & JP 62 191628 A (NISSAN MOTOR CO LTD), 22. August 1987 (1987-08-22)

## Beschreibung

Die Erfindung betrifft eine Sauganlage mit einer Vorrichtung zur Nutzung von Resonanzeffekten für eine mit Lambdaregelung und gegenüberliegenden Zylindern ausgestatteten Brennkraftmaschine nach dem Oberbegriff des Patentanspruchs 1.

Eine bekannte Brennkraftmaschine, DE Sonderausgabe ATZ Automobiltechnische Zeitschrift; MTZ Motortechnische Zeitschrift Seite 16 bis 19, umfaßt gegenüberliegende Zylinderreihen, eine Resonanz-Sauganlage mit Luftmassenmesser und eine Motorsteuerung mit Lambdaregelung.

Die DE 36 33929 C2 und EP 0 265 960 A2 behandeln Sauganlagen für Brennkraftmaschinen, mit denen Resonanzeffekte erzielt werden.

Aus der noch nicht veröffenlichten DE 198 14 970.0-13 geht eine Rohrverbindung zwischen einem Luftfilter und einer eine Vorrichtung zur Nutzung von Resonanzeffekten aufweisenden Sauganlage hervor. Die Rohrverbindung ist abschnittsweise mit zwei parallelen Rohrabschnitten versehen, denen ein einziger Rohrabschnitt vorgeschaltet ist. In besagten einzigen Rohrabschnitt sind eine Drosselklappe und ein Luftmassenmesser integriert.

Es ist Aufgabe der Erfindung eine Sauganlage für eine Brennkraftmaschine zu schaffen, die bei guter Resonanzwirkung über den wesentlichen Brennkraftmaschinen-Drehzahlbereich bezüglich Bauteilaufwand optimiert ist.

Erfindungsgemäß wird diese Aufgabe durch die Merkmale des Patentanspruchs 1 gelöst. Weitere die Erfindung ausgestaltenden Merkmale sind in den Unteransprüchen enthalten.

Die mit der Erfindung hauptsächlich erzielten Vorteile sind darin zu sehen, daß durch die Rohrabschnitte mit den Drosselklappen in der Rohrverbindung und den Querkanälen mit Sperrklappe und Resonanzklappe im Resonanzbehälter sich gezielte Resonanzeffekte ergeben, die über über einen weiten Drehzahlbereich der Brennkraftmaschine zu einem optimierten Drehmomentverhalten der besagten Brennkraftmaschine führen. Dabei ist lediglich ein Luftmassenmesser in einem Rohrabschnitt erforderlich, weil die Korrektur der Luftmenge im anderen Rohrabschnitt über die vorhandene Lambdaregelung erfolgt. Schließlich lassen sich die Rohrabschnitte und die Querkanäle auf einfache Weise in einer Sauganlage verwirklichen.

In der Zeichnung wird ein Ausführungsbeispiel der Erfindung gezeigt, das nachstehend näher beschrieben ist.

Es zeigen:
- Fig.1: eine schemattische Sauganlage einer Brennkraftmaschine,
- Fig. 2: eine Ansicht entsprechend Fig.1 und
- Fig. 3: eine weitere Ansicht entsprechend Fig.1

Eine Sauganlage 1 ist Bestandteil einer Brennkraftmaschine 2, die gegenüberliegende Zylinderreihen 3,4 umfaßt, d. h. letztere sind in Boxer- oder V-Form zueinander angeordnet, und zwar mit Abstand zu einer Längsmittellinie LM dieser Maschine. Im Ausführungsbeispiel sind pro Zylinderreihe z.B. 3 jeweils drei Zylinder 5,6,7 vorgesehen. Zwischen den Zylinderreihen 3,4 ist die Sauganlage 1 angeordnet, die eine Vorrichtung 8 zur Nutzung von Resonanzeffekten aufweist, wie sie durch Helmholtz-Resonatoren, - Bosch, Kraftfahrtechnisches Taschenbuch.22. Auflage,1995, Seite379 - erzielt werden. Den Zylindrreihen 3,4 sind Abgasanlagen 9,10 nachgeschaltet, die mit Lambdasonden 11,12 für eine nicht näher beschriebene Lambdaregelung versehen sind. Letztere dient zum Bertieb von Abgaskatalysatoren der Brennkraftmaschine 2.

Die Vorrichtung 8 der Sauganlage 1 weist einen Resonanzbhälter 13 mit prismaartiger Grundform auf, der den Zylinderreihen 3,4 zugekehrte Längswandungen 14, 15 und rechtwinkelig zu diesen verlaufende erste und zweite Stirnwandungen 16, 17 aufweist. Von der ersten Stirnwand 16 aus ist der Resonsanzbehälter 13 über eine Rohrverbindung 18 an ein Luftfilter 19 angeschlossen. Die Rohrverbindung 18 weist einen ersten Rohrabschnitt 20 und einen zweiten Rohrabschnitt 21 auf, die zwischen dem Resonanzbehälter 13 und dem Luftfilter 19 voneinander getrennt sind, jedoch parallel zueinander verlaufen. In beiden Rohrabschnitten 20, 21 sind Drosselklappen 22, 23 angeordnet. Der erste Rohrabschnitt 20 ist darüber hinaus mit einem Luftmassenmesser 24 versehen; im zweiten Rohrabschnitt 21 ist kein Luftmassenmesser untergebracht. Die korregierte Zumessung oder Regelung der Luftmenge im zweiten Rohrabschnitt 21 erfolgt über die Lambdaregelung.

Der Resonanzbehälter 13 ist mit Querkanälen 25, 26 versehen, die sich zwischen den Zylinderreihen 3, 4 erstrecken, und zwischen denen eine Trennwand 27 verläuft. Die Querkanäle 25, 26 erstrecken sich zwischen einem ersten Resonanzvolumen 28 und einem zweiten Resonanzvolumen 29, die den Zylinderreihen 3, 4 vorgelagert sind. In dem dem Luftfilter 19 benachbarten Querkanal 25 ist eine Sperrklappe 30 vorgesehen, wogegen der Querkanal 26 mit einer Resonanzklappe 31 versehen ist.

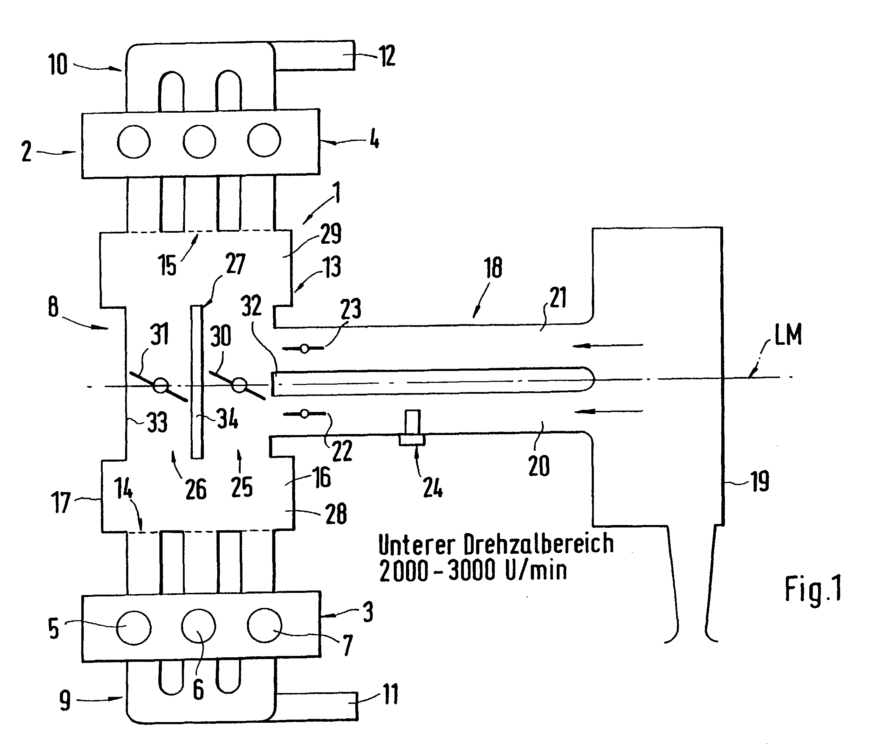

Aus Fig. 1 geht hervor, daß die Rohrabschnitte 20, 21 etwa im rechten Winkel zur Stirnwand 16 verlaufen. Dabei ist zwischen den Rohrabschnitten 20, 21 ein Bereich 32 vorgesehen, der die Längsmittellinie LM einschließt. Auf dieser Längsmittellinie LM sind die Sperrklappe 30 und die Resonanzklappe 31 angeordnet, und sie wirken mit Querkanalbereichen 33, 34 zusammen.

Gemäß Fig. 1 sind beide Drosselklappen 22, 23 geöffnet und die Sperrklappe 30 und die Resonanzklappe 31 sind geschlossen. Diese Klappenstellungen eignen sich für den Betrieb der Brennkraftmaschine im unteren Drehzahlbereich, vorzugsweise zwischen 2000 und 3500 U/min.

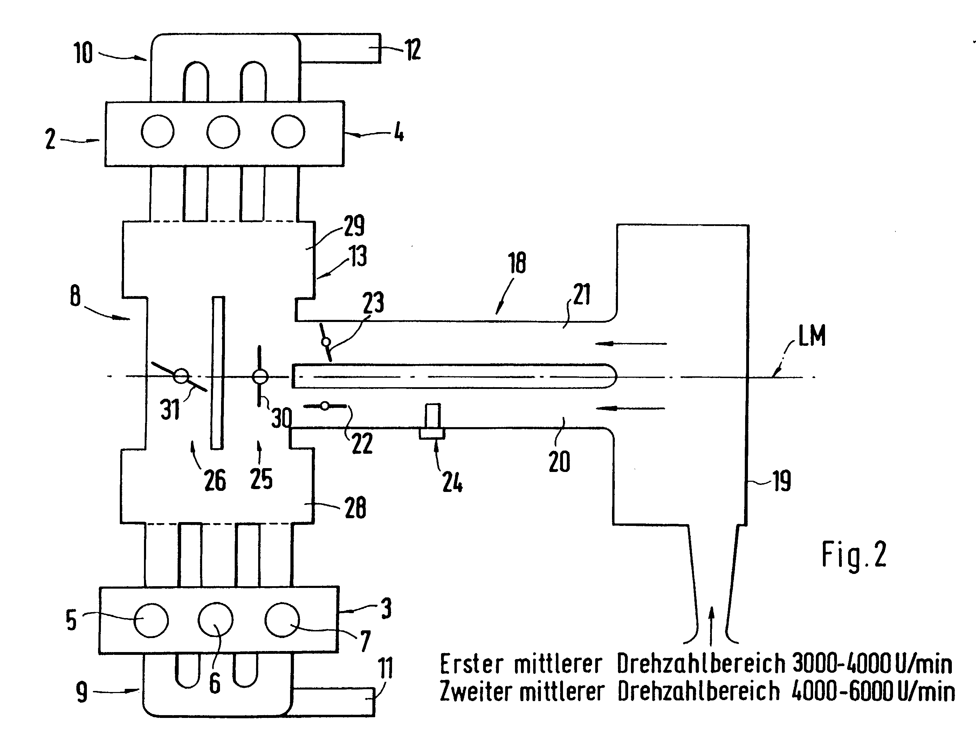

In Fig. 2 ist die Drosselklappe 22 geöffnet und die Drosselklappe 23 geschlossen, wogegen die Sperrklappe 30 geöffnet und die Resonanzklappe 31 geschlossen ist. Bei diesen Klappenstellungen läßt sich die Brennkraftmaschine in einem ersten mittleren Drehzahlbereich, beispielsweise zwischen 3500 und 4000 U/min, vorteilhaft betreiben. Sind - wie oben angegeben - bei gleichen Sellungen der Sperrklappe 30 und der Resonanzklappe 31 beide Drosselklappen 22 und 23 geöffnet, so ergibt sich in einem zweiten mittleren Drehzahlbereich z.B. zwischen 5000 und 6000 U/min ein günstiges Verhalten der Brennkraftmaschine.

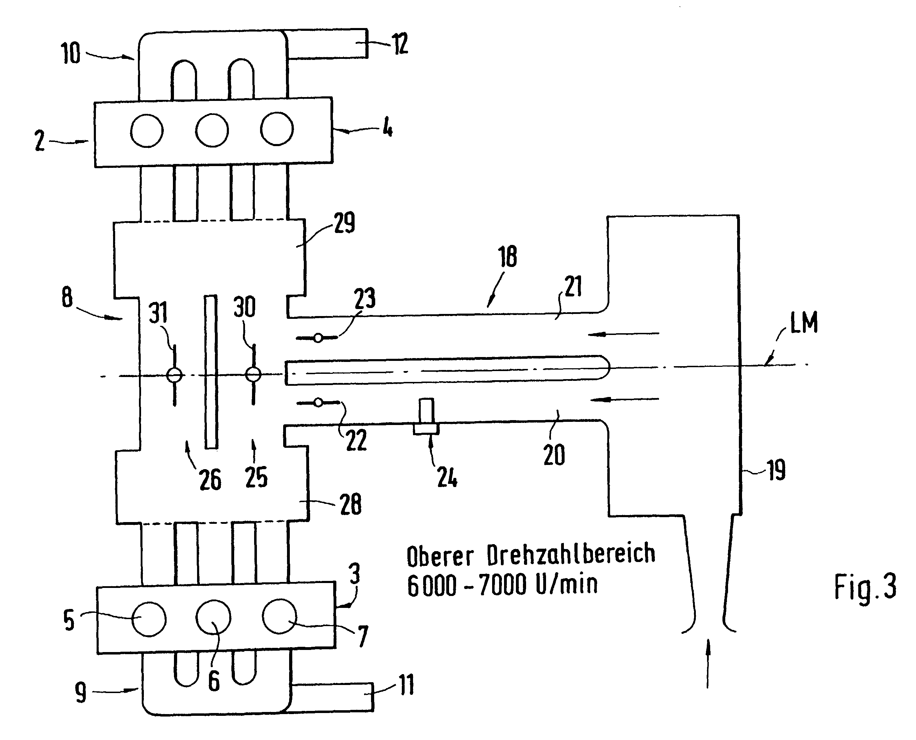

Schließlich geht aus Fig. 3 hervor, daß sämtliche Klappen - Drosselklappen 22, 23 und Sperrklappe 30 sowie Resonanzklappe 31- geöffnet sind. Diese Stellungen gewährleisten in einem oberen Drehzahlbereich d. h. zwischen 6000 und 7000 U/min hervorzuhebende Betriebsverhältnisse der Brennkraftmaschine 2.

## Patentansprüche

1. Sauganlage (1) mit einer Vorrichtung zur Nutzung von Resonanzeffekten für eine mit Lambdaregelung und gegenüberliegenden Zylinderreihen (3, 4) ausgestattete Brennkraftmaschine (2) wobei die Sauganlage (1) einen Resonanzbehälter (13) aufweist, der über eine mit einem Luftmassenmesser (24) versehene Rohrverbindung an ein Luftfilter (19) angeschlossen ist, wobei die zum Resonanzbehälter (13) führende Rohrverbindung (18) einen ersten Rohrabschnitt (20) und einen zweiten Rohrabschnitt (21) aufweist, die voneinander getrennt sind und in denen jeweils eine Drosselklappe (22 und 23) angeordnet ist, **dadurch gekennzeichnet, daß** nur in einem Rohrabschnitt (20) ein Luftmassenmesser (24) vorgeshen ist und die Regelung der Luftmenge in dem anderen Rohrabschnitt (21) über die Lambdaregelung erfolgt.

2. Sauganlage nach Anspruch 1, **dadurch gekennzeichnet, daß** sich im Resonanzbehälter (13) zwischen den Zylinderreihen (3, 4) Querkanäle (25, 26) erstrecken, die mit einer Sperrklappe (30) und einer Resonanzklappe (31) versehen sind.

3. Sauganlage nach Anspruch 2, **dadurch gekennzeichnet, daß** die Querkanäle (25, 26) sich zwischen einem ersten Resonanzvolumen (28) und einem zweiten Resonanzvolumen (29) erstrecken, die den Zylinderreihen (3, 4) vorgelagert sind.

4. Sauganlage nach den Ansprüchen 1,2 und 3, **dadurch gekennzeichnet, daß** die Sperrklappe (30) und die Resonanzklappe (31) in einem zwischen den Rohrabschnitten (20, 21) liegenden Bereich (32) gelagert und wirksam sind.

5. Sauganlage nach einem oder mehreren der vorangehenden Ansprüche, **dadurch gekennzeichnet, daß** in einem unteren Drehzahlbereich der Brennkraftmaschine (2), vorzugsweise zwischen 2000 und 3500 U/min, beide Drosselklappen (18, 19) geöffnet und die Sperrklappe (30) und die Resonanzklappe (31 ) geschlossen sind.

6. Sauganlage nach einem oder mehreren der vorangehenden Ansprüche, **dadurch gekennzeichnet, daß** in einem ersten mittleren Drehzahlbereich der Brennkraftmaschine (2), vorzugsweise zwischen 3500 und 4000 U/min, die eine Drosselklappe (21) geschlossen und die andere Drosslklappe (20) geöffnet ist, wogegen die Sperrklappe (30) geöffnet und die Resonanzklappe (31) geschlossen ist.

7. Sauganlage nach einem oder mehreren der vorangehenden Ansprüche, **dadurch gekennzeichnet, daß** in einem zweiten mittleren Drehzahlbereich der Brennkraftmaschine (2), vorzugsweise zwischen 4000 und 6000 U/min, beide Drosselklappen (20 und 21) geöffnet sind, wogegen die Sperrklappe (30) geöffnet und die Resonanzklappe (31) geschlossen ist.

8. Sauganlage nach einem oder mehreren der vorangehenden Ansprüche, **dadurch gekennzeichnet, daß** in einem oberen Drehzahlbereich der Brennkraftmaschine (2), vorzugsweise zwischen 6000 und 7000 U/min, sowohl die Drosselklappen (20, 21) wie auch die Sperrklappe (30) und die Resonanzklappe (31) geöffnet sind.

## Claims

1. An intake system (1) with a device for using resonance effects for an internal-combustion engine (2) provided with lambda control and opposed rows of cylinders (3, 4), wherein the intake system (1) has a resonance container (13) which is attached to an air filter (19) by way of a tube connexion provided with an air-mass meter (24), wherein the tube connexion (18) leading to the resonance container (13) has a first tube portion (20) and a second tube portion (21) which are separate from each other and in which one respective throttle valve (22 and 23) is arranged in each case, **characterized in that** an air-mass meter (24) is provided only in one tube portion (20), and the regulation of the air quantity is carried out in the other tube portion (21) by way of the lambda control.

2. An intake system according to Claim 1, **characterized in that** transverse ducts (25, 26), which are provided with a shut-off valve (30) and a resonance valve (31), extend in the resonance container (13) between the rows of cylinders (3, 4).

3. An intake system according to Claim 2, **characterized in that** the transverse ducts (25, 26) extend between a first resonance volume (28) and a second resonance volume (29) which are arranged in front of the rows of cylinders (3, 4).

4. An intake system according to Claims 1, 2 and 3, **characterized in that** the shut-off valve (30) and the resonance valve (31) are mounted and effective in a region (32) situated between the tube portions (20, 21).

5. An intake system according to one or more of the preceding Claims, **characterized in that** in a lower rotational-speed range of the internal-combustion engine (2), preferably between 2,000 and 3,500 r.p.m., the two throttle valves (18, 19) are open and the shut-off valve (30) and the resonance valve (31) are closed.

6. An intake system according to one or more of the preceding Claims, **characterized in that** in a first middle rotational-speed range of the internal-combustion engine (2), preferably between 3,500 and 4,000 r.p.m., one throttle valve (21) is closed and the other throttle valve (20) is open, whereas the shut-off valve (30) is open and the resonance valve (31) is closed.

7. An intake system according to one or more of the preceding Claims, **characterized in that** in a second middle rotational-speed range of the internal-combustion engine (2), preferably between 4,000 and 6,000 r.p.m., the two throttle valves (20 and 21) are open, whereas the shut-off valve (30) is open and the resonance valve (31) is closed.

8. An intake system according to one or more of the preceding Claims, **characterized in that** in an upper rotational-speed range of the internal-combustion engine (2), preferably between 6,000 and 7,000 r.p.m., both the throttle valves (20, 21) and the shut-off valve (30) and the resonance valve (31) are open.

## Revendications

1. Système d'admission (1) comportant un dispositif pour utiliser des effets de résonance pour un moteur à combustion interne (2) équipé d'une régulation lambda et de lignes de cylindres (3, 4) opposées, le système d'admission (1) comportant un récipient de résonance (18) qui est raccordé à un filtre à air (19) par une liaison tubulaire pourvue d'un dispositif de mesure des masses d'air (24), la liaison tubulaire (18) menant au récipient de résonance (13) comportant un premier tronçon de tube (20) et un deuxième tronçon de tube (21) qui sont séparés l'un de l'autre et dans chacun desquels est disposé un clapet d'étranglement (22 et 23), **caractérisé en ce qu'**un dispositif de mesure des masses d'air (24) est prévu uniquement dans un tronçon de tube (20) et la régulation de la quantité d'air dans l'autre tronçon de tube (21) s'effectue par la régulation lambda.

2. Système d'admission selon la revendication 1, **caractérisé en ce que** dans le récipient de résonance (13) s'étendent, entre les lignes de cylindres (3, 4), des canaux transversaux (25, 26) qui sont pourvus d'un clapet de fermeture (30) et d'un clapet de résonance (31).

3. Système d'admission selon la revendication 2, **caractérisé en ce que** les canaux transversaux (25, 26) s'étendent entre un premier volume de résonance (28) et un deuxième volume de résonance (29) qui sont situés en amont des lignes de cylindres (3, 4).

4. Système d'admission selon les revendications 1, 2 et 3, **caractérisé en ce que** le clapet de fermeture (30) et le clapet de résonance (31) sont montés et opèrent dans une zone (32) située entre les tronçons de tube (20, 21).

5. Système d'admission selon une ou plusieurs des revendications précédentes, **caractérisé en ce que** dans une plage inférieure des vitesses de rotation du moteur à combustion interne (2), de préférence entre 2 000 et 3 500 tours/minute, les deux clapets d'étranglement (18, 19) sont ouverts et le clapet de fermeture (30) ainsi que le clapet de résonance 531) sont fermés.

6. Système d'admission selon une ou plusieurs des revendications précédentes, **caractérisé en ce que** dans une première plage moyenne des vitesses de rotation du moteur à combustion interne (2), de préférence entre 3 500 et 4 000 tours/minute, un clapet d'étranglement (21) est fermé et l'autre clapet d'étranglement (20) est ouvert, tandis que le clapet de fermeture (30) est ouvert et le clapet de résonance (31) est fermé.

7. Système d'admission selon une ou plusieurs des revendications précédentes, **caractérisé en ce que** dans une deuxième plage moyenne des vitesses de rotation du moteur à combustion interne (2), de préférence entre 4 000 et 6 000 tours/minute, les deux clapets d'étranglement (20 et 21) sont ouverts, tandis que le clapet de fermeture (30) est ouvert et le clapet de résonance (31) est fermé.

8. Système d'admission selon une ou plusieurs des revendications précédentes, **caractérisé en ce que** dans une plage supérieure des vitesses de rotation du moteur à combustion interne (2), de préférence entre 6 000 et 7 000 tours/minute, les clapets d'étranglement (20, 21) comme le clapet de fermeture (30) et le clapet de résonance (31) sont ouverts.
